Europäisches Patentamt

European Patent Office

Office européen des brevets

(19)

(11) Veröffentlichungsnummer: **0 125 502**
**B1**

(12) **EUROPÄISCHE PATENTSCHRIFT**

(45) Veröffentlichungstag der Patentschrift:
06.04.88

(21) Anmeldenummer: 84104146.0

(22) Anmeldetag: 12.04.84

(51) Int. Cl.⁴: **H 02 K 29/06,** H 02 K 1/14

(54) Elektronisch kommutierter Gleichstrommotor.

(30) Priorität: 20.04.83 DE 3314239

(43) Veröffentlichungstag der Anmeldung:
21.11.84 Patentblatt 84/47

(45) Bekanntmachung des Hinweises auf die Patenterteilung:
06.04.88 Patentblatt 88/14

(84) Benannte Vertragsstaaten:
DE FR GB IT

(56) Entgegenhaltungen:
EP-A-0 040 484
CH-A-559 450
DE-A-2 015 018
DE-B-1 298 615
DE-B-2 225 442

(73) Patentinhaber: ALCATEL N.V., Strawinskylaan 537 (World Trade Center), Amsterdam (NL)
(84) Benannte Vertragsstaaten: FR GB IT

(73) Patentinhaber: Standard Elektrik Lorenz Aktiengesellschaft, Hellmuth- Hirth- Strasse 42, D-7000 Stuttgart 40 (DE)
(84) Benannte Vertragsstaaten: DE

(72) Erfinder: Glasauer, Rudolf, Oberndorfer Strasse 28, D-8300 Landshut (DE)
Erfinder: Feigel, Josef, Dr., Rennweg 76, D-8300 Landshut (DE)

(74) Vertreter: Pohl, Heribert, Dipl.- Ing, Standard Elektrik Lorenz AG Patent- und Lizenzwesen Postfach 30 09 29, D-7000 Stuttgart 30 (DE)

EP 0 125 502 B1

## Beschreibung

Die Erfindung betrifft einen elektronisch kommutierten Gleichstrommotor mit einen permanentmagnetischen Außenläufer, der aus einem glockenförmigen Körper aus magnetisierbarem Werkstoff und einem auf dessen Innenumfang angeordneten Permanentmagneten besteht, und einem mit einer ein Wechselfeld erzeugenden Wicklung versehenem Ständer, welcher doppel-T-förmig ausgebildet und auf dem gemeinsamen Joch des Doppel-T die Ständerwicklung angeordnet ist.

Derartige Gleichstrommotoren sind bekannt (beispielsweise DE-AS 22 25 442 und DE-AS 26 12 464).

Bei diesen Motoren handelt es sich um einsträngige, zweipulsig bestromte, kollektorlose und permanent erregte Gleichstrommotoren mit Außenläufer. Diese Gleichstrommotoren sind in der Lage, nach Bestromung der Ständerwicklung aus dem Stand wieder selbsttätig anzulaufen, wenn an der Motorwelle nur ein geringes Bremsmoment vorhanden ist. Die Bestromung der Ständerwicklung erfolgt bei diesen Gleichstrommotoren in Abhängigkeit von der Drehstellung des Läufers, wobei diese von einem Sensor, beispielsweise einen Hall-Generator, erfaßt wird und das dabei gewonnene Signal eine elektronische Schaltung steuert, welche die Ständerwicklung zur Drehmomentbildung in der erforderlichen Weise an eine Gleichspannungsquelle legt.

Diese Art von Gleichstrommotoren weisen alle einen Nachteil auf, welcher seinen Ausdruck in den Anlaufschwierigkeiten findet. Bei diesen Gleichstrommotoren wird mit Hilfe der elektronisch gesteuerten Ständerwicklung ein Ständer-Wechselfeld erzeugt, welches im Zusammenwirken mit dem Erregerfeld des Permenentmagneten ein pulsierendes Moment bildet. Wenn die Polachse des Permanentmagneten und die Polachse des Wechselfeldes keine Verdrehung zueinander aufweisen, dann ist des Drehmoment Null. Der Läufer kann nicht aus eigener Kraft anlaufen.

Für die Bildung eines Anlaufdrehmomentes ist es erforderlich, daß zwischen der Polachse des Permanentmagneten und der Polachse des Ständerwechselfeldes ein von Null verschiedener Winkel vorhanden ist. Das bedeutet, daß bei stromloser Ständerwicklung die Polachse des Permanentmagneten um einen bestimmten Drehwinkel gegenüber der Polachse des Wechselfeldes verdreht sein muß.

Diese erforderliche Verdrehung des Läufers gegenüber dem Ständer in der Ruhestellung wird bei dem bekannten Gleichstrommotor durch einen asymmetrischen, in Umfangsrichtung veränderlichen Luftspalt zwischen Ständer und Läufer verwirklicht. Dieser über den Umfang des Motors nicht konstante magnetische Widerstand des Luftspaltes bewirkt, daß der permanent erregte Läufer infolge der Asymmetrie des Luftspaltes gegenüber der Polachse des Ständers um einen Winkel gedreht wird. Die Möglichkeit, diesen Winkel durch eine Gestaltung des Luftspaltes zu optimieren, ist begrenzt, weil dadurch gleichzeitig die Ausnutzung des Dauermagneten vermindert wird.

Bei dem bekannten Gleichstrommotor ist der Ständer aus einem einstückigen Blechschnitt hergestellt. Auf das aus diesem Blechschnitt zusammengesetzte Ständerblechpaket ist die Ständerwicklung gewickelt. Diese Art der Ständerwicklung ist aufwendig und kostspielig. Außerdem ist sie für die automatische Fertigung wenig geeignet.

Die der Erfindung zugrundeliegende Aufgabe besteht darin, den bekannten Gleichstrommotor in der Weise weiter zu entwickeln, daß die Verdrehung des Läufers gegenüber dem Ständer in der Ruhestellung des Motors ohne Verschlechterung des magnetischen Luftspaltleitwertes möglichst groß ist. Außerdem soll der neue Gleichstrommotor derart gestaltet sein, daß seine Einzelteile für die automatische Herstellung geeignet sind und er insgesamt kostengünstig montiert werden kann.

Diese Aufgabe ist erfindungsgemäß dadurch gelöst, daß der Ständer aus einem Jochpaket und zwei Polpaketen zusammengesetzt ist, jedes Polpaket auf der gleichen Seite mit einer Verlängerung in Umfangsrichtung versehen ist und die Polpakete derart ausgebildet sind, daß ein konstanter Luftspalt zwischen Ständer und Läufer entsteht, die Ständerwicklungen von zwei auf dem Jochpaket derart angeordneten Spulenkörpern getragen sind, daß jeweils eine Jochpakethälfte mit einem Polpaket einen Ständerpol bildet und daß die Achsen der Jochpakethälften parallel zur Längsachse des ganzen Jochpaketes einander entgegengerichtet versetzt sind.

Weitere vorteilhafte Ausgestaltungen der Erfindung sind in den Ansprüchen 2 bis 5 enthalten. Diese ist nachstehend an in den Figuren 1 bis 7 gezeigten Ausführungsbeispielen erläutert. Es zeigen:

Fig. 1 eine Draufsicht auf Läufer und Ständer des neuen Gleichstrommotors,

Fig. 2 einen Längsschnitt durch den Gleichstrommotor gemäß Fig. 1,

Fig. 3 den Aufbau des Ständerblechpaketes,

Fig. 4 den Längsschnitt des Läufers,

Fig. 5a bis Fig. 5c verschiedene Ansichten des Wickelkörpers zur Aufnahme der Ständerwicklung,

Fig. 6 den Längsschnitt des Läuferlagers und

Fig. 7 einen Gleichstrommotor mit einer anderen Gestaltung des Läufers.

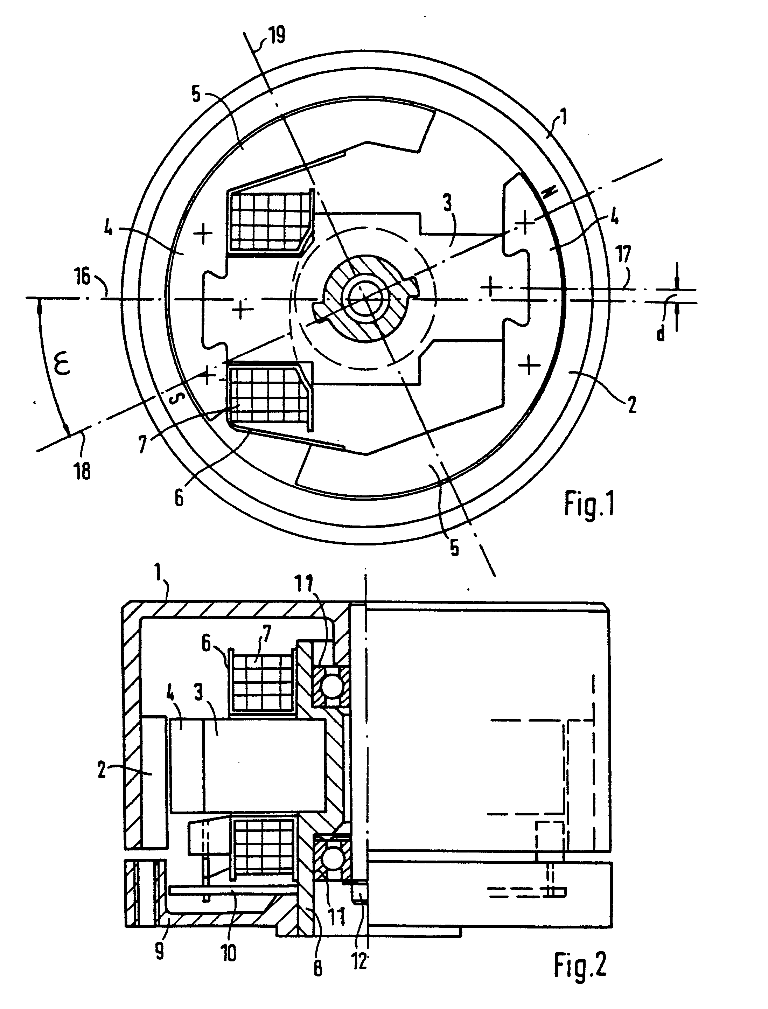

Fig. 1 zeigt den Läufer und den Ständer des neuen Gleichstrommotors von einer Stirnseite her, nachdem der Befestigungsflansch 9 (Fig. 2) und die Leiterplatte 10, welche die für die Kommutierung erforderliche elektrische Schaltung enthält, entfernt worden sind. Bei dem gezeigten Gleichstrommotor handelt es sich um einen Außenläufermotor in zweipoliger Ausführung. Der Ständer besteht aus einem glockenförmigen Körper 1 aus einem magnetisierbaren Werkstoff, wie Weicheisen, an dessen Innenumfang ein Dauermagnet 2, beispielsweise ein kunststoffgebundener, plattenförmiger Dauermagnet, eingesetzt ist, der in der eingezeichneten Weise magnetisiert ist.

Der Ständer besteht aus drei Blechpaketteilen, nämlich einem Jochpaket 3 und zwei Polpaketen 4, welche mittels schwalbenschwanzförmiger Passungen formschlüssig miteinander verbunden sind. Die Polpakete 4 weisen nicht nur die von Doppel-T-Ständerwicklungen her bekannte Form eines Pilzhutes auf, sondern sie besitzen beide auf der gleichen Seite in Umfangsrichtung eine Verlängerung 5, die sich bei dem gezeigten Ausführungsbeispiel mechanisch über etwa 70 Winkelgrade erstreckt, so daß sich jedes Polpaket mechanisch insgesamt über etwa 150 Winkelgrade erstreckt. Auf dem Jochpaket 3 sind die Spulenkörper 6 mit den Ständerwicklungen 7 angeordnet. (In Fig. 1 sind nur ein Spulenkörper 6 und eine Ständerwicklung gezeichnet). Wie weiter aus Fig. 1 ersichtlich, besitzt der Motor die Längsachse 16. Da die Ständerwicklungen 7 asymmetrisch zur Längsachse 16 angeordnet sind, ist die Polachse 17 des Wechselfeldes um den Abstand d parallel zur Längsachse 16 versetzt. Der Läufer besitzt die Polachse 18 des Permanentmagneten; im rechten Winkel zu dieser liegt die neutrale Zone 19. In Fig. 1 ist die Polachse 18 des Permanentmagneten in der Lage gezeichnet, welche sie einnimmt, wenn die Ständerwicklung nicht bestromt ist. Dann ist die Polachse 18 des Permanentmagneten gegenüber der Polachse 17 des Wechselfeldes um den Winkel $\varepsilon$ verdreht.

Wie aus Fig. 2 zu erkennen, ist der Ständer in einem hülsenförmigen Lagerträger 8 befestigt, welcher seinerseits mit dem Befestigungsflansch 9 verbunden ist, der auch die Leiterplatte 10 mit der elektrischen Schaltung trägt. In dem Lagerträger 8 sind Kugellager 11 angeordnet, in denen die Läuferwelle 12 gelagert ist. Anstatt in Kugellagern kann die Läuferwelle 12 auch in anderen Lagern, beispielsweise Sinterkalottenlagern, gelagert sein.

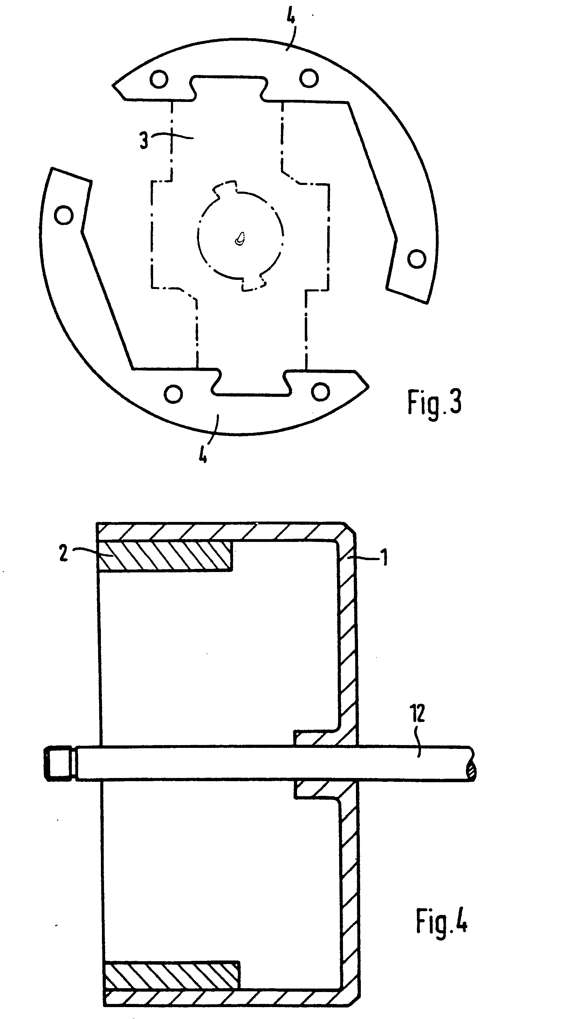

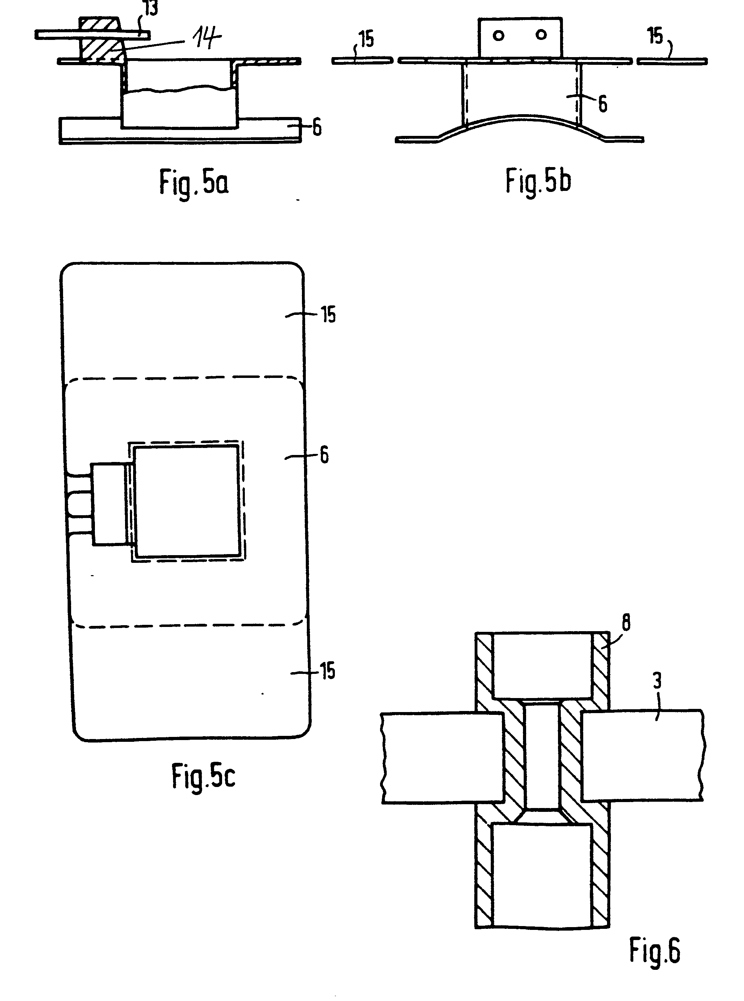

Fig. 3 verdeutlicht nochmals den Aufbau des Ständers aus dem Jochpaket 3 und den Polpaketen 4. Die Bleche der Polpakete 4 sind in an sich bekannter Weise durch Nieten miteinander verbunden, während die Bleche des Jochpaketes 3 - wie in Fig. 6 verdeutlicht - durch den Lagerträger 8 zusammengehalten sind. Der Lagerträger kann beispielsweise einstückig druckgegossen sein.

Wie Fig. 3 weiter verdeutlicht, stehen die die Spulenkörper 6 tragenden Schenkel des Jochpakets 3 asymmetrisch zur Längsachse 16.

Fig. 4 zeigt den Läufer, bestehend aus dem glockenförmigen Körper 1, dem Dauermagneten 2 und der Läuferwelle 12.

Die Figuren 5a bis 5c verdeutlichen verschiedene Ansichten des Spulenkörpers 6. Es sind zwei Besonderheiten as Spulenkörper erkennbar. Die eine sind die Lötstifte 13, welche in dem Ansatz 14 des Spulenkörpers 6 vorhanden sind. Mit dem einen Ende der Lötstifte 13 können die Enden der Ständerwicklung 7 und mit dem anderen Ende der Lötstifte 13 Leiterbahnen auf der Leiterplatte 10 elektrisch leitend verbunden werden. Die andere Besonderheit sind die Laschen 15 des Spulenkörpers, welche bei der Montage des Motors auf die Ständerwicklung (siehe Fig. 1) geklappt sind.

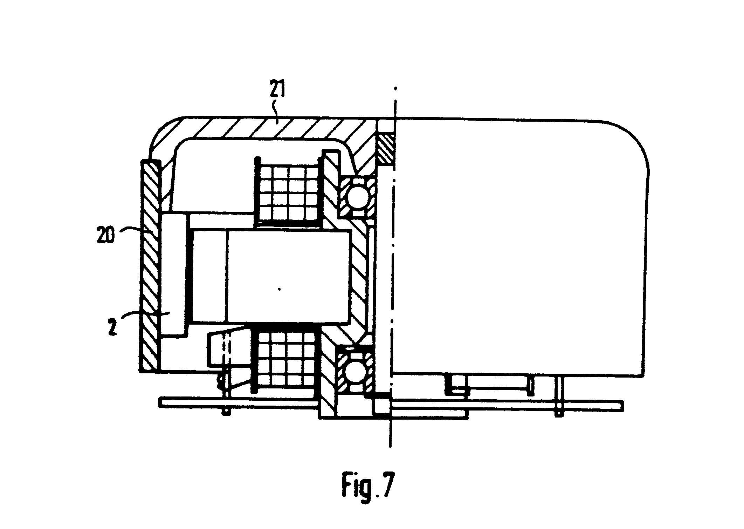

Bei dem aus Fig. 7 ersichtlichen Motor unterscheidet sich der Läufer dadurch, daß der glockenförmige Körper 1 zweiteilig ausgebildet ist und aus dem Zylinder 20 und dem Boden 21 besteht. Da der Zylinder 20 den magnetischen Rückschluß für den Dauermagneten 2 darstellt, muß er aus einem magnetisierbaren Werkstoff bestehen. Der Boden 21 dagegen kann aus einem nicht magnetisierbaren Werkstoff, wie Kunststoff oder Aluminiumdruckguß, bestehen.

Der neue Gleichstrommotor weist gute Anlaufeigenschaften auf. Wegen der Verdickung der Verlängerungen 5 wird dort ein günstiger magnetischer Widerstandswert geschaffen, so daß sich die neutrale Zone 19 des Läufers in der Ruhestellung des Motors in diese Lage einstellt. Das ergibt einen für die Drehmomentbildung optimalen Winkel $\varepsilon$, so daß stets ein sicherer Anlauf des Motors gewährleistet ist.

Weiterhin besteht der neue Gleichstrommotor aus in einfacher Weise gestalteten und aufgebauten Teilen, welche teilweise auf Automaten hergestellt und/oder montiert werden können.

## Patentansprüche

1. Elektrisch kommutierter Gleichstrommotor mit einem permanentmagnetischen Außenläufer, der aus einem glockenförmigen Körper (1) aus magnetisierbarem Werkstoff und einem auf dessen Innenumfang angeordneten Permanentmagneten (2) besteht, und einem mit einer ein Wechselfeld erzeugenden Wicklung versehenem Ständer, welcher doppel-T-förmig ausgebildet und auf dem gemeinsamen Joch des Doppel-T die Ständerwicklung (7) angeordnet ist, dadurch gekennzeichnet, daß der Ständer aus einem Jochpaket (3) und zwei Polpaketen (4) zusammengesetzt ist, jedes Polpaket (4) auf der gleichen Seite mit einer Verlängerung (5) in Umfangsrichtung versehen ist und die Polpakete (4) derart ausgebildet sind, daß ein konstanter Luftspalt zwischen Ständer und Läufer entsteht, die Ständerwicklung (7) von zwei auf dem Jochpaket (3) angeordneten Spulenkörpern (6) derart getragen sind, daß jeweils eine Jochpakethälfte mit einem Polpaket (4) einen Ständerpol bildet und die Achsen (17) der Jochpakethälften parallel zur Längsachse (16) des ganzen Jochpaketes (3) einander entgegengerichtet versetzt sind.

2. Gleichstrommotor nach Anspruch 1, dadurch gekennzeichnet, daß das Jochpaket (3) einstückig mit einem druckgegossenen Lagerträger (8) verbunden ist.

3. Gleichstrommotor nach den Ansprüchen 1 und 2, dadurch gekennzeichnet, daß der Spulenkörper (6) mit Lötstiften (13) versehen ist.

4. Gleichstrommotor nach den Ansprüchen 1 bis 3, dadurch gekennzeichnet, daß die Polachse (17) des Wechselfeldes nach der zur Verlängerung (5) entgegengesetzten Seite zur Ständerlängsachse (16) versetzt angeordnet ist.

5. Gleichstrommotor nach den Ansprüchen 1 bis 4, dadurch gekennzeichnet, daß der glockenförmige Körper (1) aus einem Zylinder (20) aus magnetisierbarem Werkstoff und einem Boden (21) aus nicht magnetisierbarem Werkstoff besteht.

## Claims

1. Electronically commutated d.c.motor comprising a permanent-magnet rotor which consists of a dome-shaped body (1) of magnetizable material and of a permanent magnet (2) disposed on the inner circumference thereof, and further comprising a stator provided with a winding producing an alternating field, the stator having a double-T-shaped design and the stator winding (7) being disposed on the common yoke of the double T, characterized in that the stator is composed of one yoke stack (3) and two pole stacks (4), each pole stack (4) is provided on the same side with an extension (5) in the circumferential direction and the pole stacks (4) are designed in such a way that a constant air gap is created between the stator and the rotor, and that the stator windings (7) are carried in such a way on two coilforms (6) disposed on the yoke stack (3) that in each case a yoke-stack half with a pole stack forms a stator pole and the axes (17) of the yoke-stack halves are staggered oppositely in relation to each other, parallel with the longitudinal axis (16) of the entire yoke stack (3).

2. A d.c.motor as claimed in Claim 1, characterized in that said yoke stack (3) is integrally connected to a pressure-cast bearing support (8).

3. A d.c. motor as claimed in Claims 1 and 2, characterized in that said coilform (6) is provided with soldering pins (13).

4. A d.c.motor as claimed in Claims 1 to 3, characterized in that the polar axis (17) of the alternating field is staggered towards the side opposite said extension (5) in relation to said longitudinal stator axis (16).

5. A d.c.motor as claimed in Claims 1 to 4, characterized in that the dome-shaped body (1) consists of a cylinder (20) of magnetizable material and a bottom (21) of non-magnetizable material.

## Revendications

1. Moteur à courant continu à commutation électronique comprenant un rotor à aimant permanent constitué par un corps en forme de dome en matériau magnétisable et un aimant permanent disposés sur la circonférence intérieure de celui-ci, ainsi qu'un stator pourvu d'un enroulement produisant un champ alternatif, le stator ayant une forme en double T, tandis que l'enroulement du stator est disposé sur la branche commune du double T, caractérisé en ce que le stator est composé d'un noyau (3) et de deux épanouissements polaires (4), chaque épanouissement polaire (4) étant pourvu, du même côté, d'une extension (5) en direction circonférentielle et les épanouissements polaires (4) étant conformés de telle sorte qu'un intervalle constant est présent entre stator et rotor, en ce que l'enroulement du stator (7) est enroulé sur deux bobines (5) placées sur le noyau (3) de sorte que chaque moitié du noyau forme un pôle de stator, avec un épanouissement polaire (4) et en ce que les axes (17) des moitiés du noyau soient décalés en sens inverses parallèlement à l'axe longitudinal (16) de l'ensemble du noyau (3).

2. Moteur à courant continu conforme à la revendication 1, caractérisé en ce que ledit noyau est formé d'une seule pièce avec un palier coulé sous pression (8).

3. Moteur à courant continu conforme aux revendications 1 et 2, caractérisé en ce que la bobine (6) est pourvue de broches de raccordement (13).

4. Moteur à courant continu conforme aux revendications 1 à 3, caractérisé en ce que l'axe polaire (17) du champ alternatif est décalé vers le côté opposé à ladite extension (5) par rapport à l'axe longitudinal du stator (16).

5. Moteur à courant continu conforme aux revendications 1 à 4, caractérisé en ce que le corps en forme de dome (1) consiste en un cylindre (20) de matériau magnétique et un fond (21) de matériau non magnétique.

Fig.1

Fig.2

Fig.3

Fig.4

Fig.5a

Fig.5b

Fig.5c

Fig.6

Fig. 7